**Europäisches Patentamt**

**European Patent Office**

**Office européen des brevets**

(19)

(11) Veröffentlichungsnummer : **0 234 398**
**B1**

(12) # EUROPÄISCHE PATENTSCHRIFT

(45) Veröffentlichungstag der Patentschrift :
26.04.89

(51) Int. Cl.⁴ : **F 16 H 53/02, F 01 L 1/04**

(21) Anmeldenummer : **87101808.1**

(22) Anmeldetag : **10.02.87**

(54) Nockenwelle zur Betätigung von Ventilstössel bei Verbrennungskraftmaschinen.

(30) Priorität : **26.02.86 DE 3606111**

(43) Veröffentlichungstag der Anmeldung :
**02.09.87 Patentblatt 87/36**

(45) Bekanntmachung des Hinweises auf die Patenterteilung : **26.04.89 Patentblatt 89/17**

(84) Benannte Vertragsstaaten :
**FR GB IT SE**

(56) Entgegenhaltungen :
EP--A-- 0 222 114
DE--A-- 3 409 541
DE--B-- 257 479
ANTRIEBSTECHNIK, Band 15, Nr. 9, 1976, Seiten 473-
474, Mainz; R. SCHUMANN "Spannelemente"

(73) Patentinhaber : **Etablissement Supervis**
**Altenbachstrasse 17**
**FL-9490 Vaduz (LI)**

(72) Erfinder : **Lukas, Matt Dipl.-Ing**
**Flux 555**
**FL-9492 Eschen (LI)**

(74) Vertreter : **Hefel, Herbert, Dipl.-Ing.**
**Egelseestrasse 65a**
**A-6800 Feldkirch-Tosters (AT)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf eine Nockenwelle zur Betätigung von Ventilstößel bei Verbrennungskraftmaschinen, mit einer Welle und mindestens einem auf die Welle aufgeschobenen und mit ihr verbundenen Nocken, der eine axiale Bohrung mit im wesentlichen zum Querschnittprofil der Welle korrespondierendem Profil aufweist.

Nockenwellen für Verbrennungskraftmaschinen sind hoch beanspruchte Maschinenteile und der umfangreiche Stand der Technik auf diesem Gebiet bescheinigt die Bemühungen, die hier getätigt worden sind, um eine wirtschaftlich und technisch zufriedenstellende brauchbare Lösung zu finden. Insbesondere darf darauf verwiesen werden, daß eine Nockenwelle beim betriebsmäßigen Einsatz sehr extremen dynamischen Beanspruchungen unterworfen ist, die aus der besonderen Art ihrer Aufgabe resultieren, so daß bislang alle bekanntgewordenen Nockenwellen eine metall- und/oder formschlüssige Verbindung zwischen Nocken und Wellen besitzen. Umfangreiche Erhebungen auf dem einschlägigen Gebiet in der Patentliteratur haben keine anderen Konstruktionsvorschläge finden lassen, als die bereits erwähnte metall- und/oder formschlüssige Verbindung zwischen Nocken und Welle. Insbesondere sind auch Nockenwellen bekannt, bei welchen die Nocken und die Welle getrennt gefertigt und dann zu einer baulichen Einheit zusammengefügt werden. Bei einer bekannten Konstruktion dieser Art (DE-OS 28 38 995 und 33 21 846) ist die Welle mit mehreren axial verlaufenden Nuten versehen und die Bohrung des Nockens besitzt dazu einen radialen Vorsprung, der in diese Nut eingreift, wobei die Bohrung des Nockens die Welle mit Spiel umfaßt, dabei jedoch ist der erwähnte Vorsprung in seiner radialen Erstreckung so groß bemessen, daß Nocken und Wellen unter Reibungsschluß zusammenfügbar sind und ineinander in Eingriff stehen. Der infolge des erwähnten Spieles vorhandene Spalt wird nach dem Zusammenfügen von Nocken und Welle von außen her mit Hartlot gefüllt. Umfangsseitig sind dabei auf der Welle so viel Nuten angebracht, wie es der Nockenphasenlage für den jeweiligen Einsatzzweck entspricht. Diese Konstruktion ist insofern nicht zweckmäßig, da es eines aufwendigen Arbeitsvorganges bedarf, die Nuten auf der Welle positionsgerecht zu fertigen. Diese Nuten müssen sehr genau gefertigt sein, sie müssen, was ihre Winkellage betrifft, sehr exakt positioniert sein.

Die US-Patentschrift 35 43 589 zeigt und beschreibt eine Kurvenscheibe mit ausbalancierten, federbelasteten Abtastrollen. Die Kurvenscheibe besitzt dazu eine Mehrzahl von im wesentlichen gleichen Kurvenbuckeln, die um eine Achse gleichmäßig verteilt sind ; ferner sind zwei voneinander distanzierte Abstandsrollen in einer solchen Anordnung gegenüber der Kurvenscheibe vorgesehen, daß, wenn die eine Abtastrolle sich auf einem ansteigenden Abschnitt eines Kurvenbuckels befindet und dabei Energie aus dem Antriebsmechanismus entnimmt, die andere Abtastrolle auf einem abfallenden Abschnitt eines Kurvenbuckels abrollt und dabei Energie zurückliefert und zwar in jenem Umfang, der von der ersterwähnten Abtastrolle dem Aggregat entzogen wird. Die Zeichnungen zu dieser Patentschrift veranschaulichen diesen Gedanken. Diese Zeichnungen zeigen auch den Aufbau der Kurvenscheibe bzw. des Steuerschalters : Auf einer in den Beschreibungsunterlagen zu dieser Patentschrift nicht näher bezeichneten Welle von kreisrundem Querschnitt ist eine Kurvenscheibe angeordnet, die entweder eine gerade oder aber eine ungerade Anzahl solcher Kurvenbuckeln hat. Die Abtastrollen, die von federnden Lamellen getragen sind, die ihrerseits elektrische Kontakte aufweisen, liegen dabei relativ zur Kurvenscheibe so, daß, wenn sich die Kurvenscheibe dreht, die eine Abtastrolle auf einen Kurvenbuckel hinaufrollt, wogegen die andere Abtastrolle gleichzeitig einen solchen Kurvenbuckel hinunterrollt. Die Verbindung zwischen Antriebswelle einerseits und Kurvenscheibe andererseits ist hier durch ein hohlzylindrisches Element gebildet, das aus makromolekularem Material gefertigt ist. Diese Vorveröffentlichung zeigt und beschreibt keine Nockenwelle für Brennkraftmaschinen, sondern eine Steuerwelle mit einer Kurvenscheibe zur Betätigung elektrischer Lamellenkontakte, die Kurvenscheibe zur Steuerung der Abtastrollen bzw. der Schaltfedern ist nur geringfügig belastbar, wobei die Kurvenscheibe während einer vollen Umdrehung gleichmäßig belastet werden soll. Die eigentliche grundsätzliche Idee, die der hier geschilderten vorbekannten Konstruktion zugrundeliegt, ist die Energierückgewinnung und die damit verbundene Drehmomentreduzierung des Antriebmotors.

Es ist ferner bekannt, zur kraftschlüssigen Verbindung einer Welle und einer Nabe einen sogenannten Toleranzring zu verwenden. Es handelt sich hier um einen in sich gewellten Federblechstreifen, der zu einem offenen, einen Längsschlitz aufweisenden Ring gebogen ist. Dieser Ring wird entweder auf die Welle aufgeschoben oder in die Nabenbohrung eingesetzt. Der Ring ist dabei so bemessen, daß bei eingesetztem Ring die Kanten, die den Längsschlitz begrenzen, voneinander distanziert sind. Sind die zu verbindenden Teile gepaart, so kann der Toleranzring in Abhängigkeit der auf die durch ihn verbundenen Maschinenelemente einwirkenden Kräfte und Momente sowohl radial, wie auch in Umfangsrichtung aufgrund des erwähnten Längsschlitzes etwas nachgeben. Im allgemeinen Maschinenbau haben sich diese sogenannten Toleranzringe durchaus bewährt, sie ermöglichen eine schnelle, kostensparende Montage, eine einfache Konstruktion der Anschlußteile, sie vermögen in hohem Ausmaß unterschiedliche Wärmedehnungen zwischen Maschinenelementen aus verschiedenen Werkstoffen auszugleichen, sie sind temperaturbeständig, sie erlauben große Toleranzfelder an den zu verbindenden Teilen und sind darüberhinaus auch noch beständig gegen chemische Beanspruchung.

Eine Nockenwelle ist ein Maschinenbauelement besonderer Art, insofern da sie bei betriebsmäßigem Einsatz sehr extremen, dynamischen Beanspruchungen unterworfen ist, so daß bislang alle bekanntgewordenen Nockenwellen eine materialschlüssige und/oder formschlüssige Verbindung zwischen Welle und Nocken besitzen. Von diesem Stand der Technik ausgehend strebt die Erfindung danach, die Fertigung einer solchen Nockenwelle zu vereinfachen und dabei gleichzeitig ihre Qualität zu verbessern und trotzdem Welle und Nocken nur kraftschlüssig zu verbinden und die für eine solche Verbindung bekanntgewordenen Bauelemente einzusetzen. Überraschenderweise gelingt die Lösung dieser komplexen Aufgabe dadurch, daß zwischen Nocken und Welle ein in sich gewellter, längsgeschlitzter Federblechstreifen (Toleranzring) liegt, dessen den Längsschlitz begrenzende Kanten bei unbelastetem, jedoch in die Bohrung des Nockens eingelegtem bzw. auf die Welle aufgestecktem Federblechstreifen — bevor die zu paarenden Teile zusammengefügt werden — in Umfangsrichtung des Federblechstreifens abgestützt sind.

Die Zeichnungen veranschaulichen Ausführungsbeispiele der Erfindung. Es zeigen :

Fig. 1 einen Abschnitt einer Nockenwelle in Schrägsicht ;

Fig. 2 einen Nocken für die Nockenwelle nach Fig. 1 in einem gegenüber dieser Figur vergrößerten Maßstab und

Fig. 3 einen Querschnitt durch die Nockenwelle nach Fig. 1, ebenfalls in einem gegenüber dieser Figur vergrößerten Maßstab ;

Fig. 4 ein weiter vergrößertes Detail aus Fig. 3, das in dieser Figur durch die Linie A begrenzt ist ;

Fig. 5 schematisch den Verlauf der Radialkraft auf den Nocken während einer Umdrehung der Nockenwelle ;

Fig. 6 einen Querschnitt durch eine Nockenwelle anderer Bauart ;

Fig. 7 ein vergrößertes Detail aus Fig. 6, das in dieser Fig. 6 durch die Linie B begrenzt ist ;

Fig. 8 einen Toleranzring in Ansicht und

Fig. 9 einen Querschnitt gemäß der Linie IX-IX in Fig. 8.

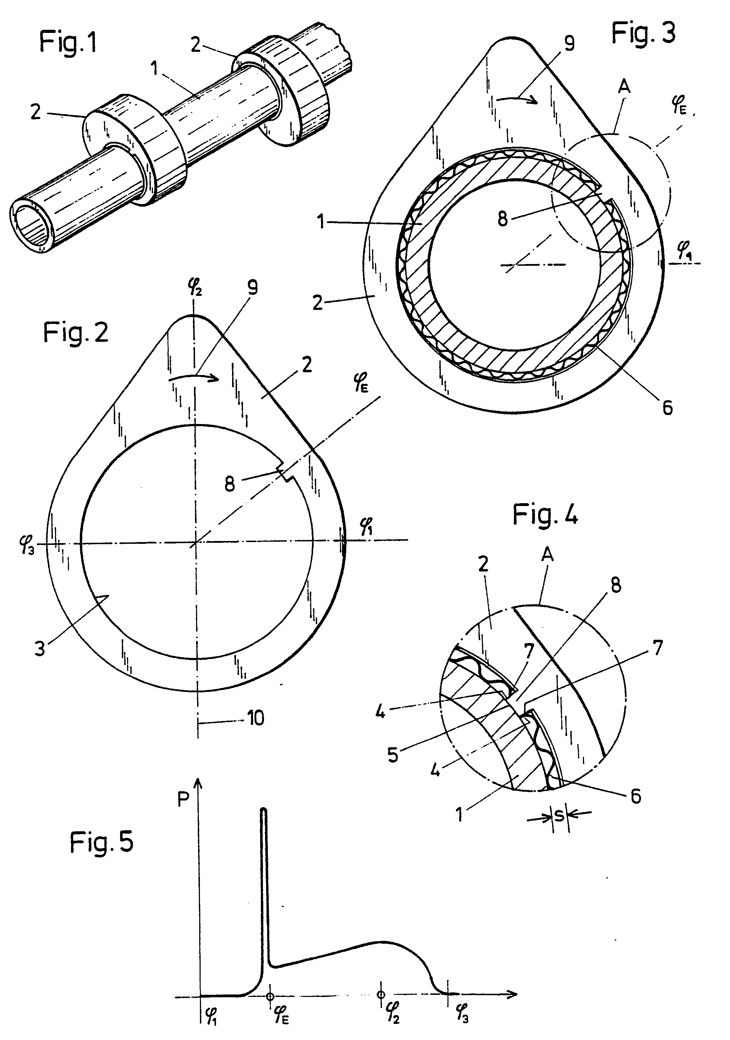

Die Nockenwelle nach Fig. 1 besteht aus der durch ein Rohr gebildeten Welle 1 und den auf dieser Welle 1 befestigten Nocken 2, die voneinander in Achsrichtung der Welle 1 distanziert sind und die gegeneinander darüberhinaus noch winkelversetzt sind, wie es der jeweiligen Phasenlage der zu betätigenden motorischen Elemente entspricht, für die die Nockenwelle vorgesehen ist.

Fig. 2 zeigt nun einen Nocken in einem gegenüber Fig. 1 vergrößerten Maßstab in Ansicht. Der Nocken bzw. seine Außenkontur ist bezüglich der Symmetrieachse 10 symmetrisch ausgestaltet. Die Bohrung 3, deren Durchmesser etwas größer ist als der Außendurchmesser der Welle 1, besitzt einen gegen deren Mitte auskragenden Vorsprung 8, der von zwei im wesentlichen radial verlaufenden Flanken 4 begrenzt ist und die der Welle 1 zugewandte Fläche 5 des Vorsprunges 8 ist als Teilzylinderfläche ausgebildet, deren Krümmung im wesentlichen der Krümmung der Welle 1 entspricht, so daß diese Fläche 5 schon nach der Montage des Nockens 2 auf der Welle 1 spielfrei und satt anliegt. Dadurch ist der Montageversatz zwischen Nocke 2 und Welle 1 außerordentlich gering.

Zwischen der Welle 1 und der Wandung der Bohrung 3 liegt (Fig. 3) ein geschlitzter, in sich gewellter Federblechstreifen 6, dessen radiale Stärke s der halben Differenz des Durchmessers der Bohrung 3 und des Außendurchmessers der Welle 1 entspricht. Die radial gemessene Höhe des Vorsprunges 8 entspricht ebenfalls in etwa diesem Maß s. Federblechstreifen 6 der erwähnten Art sind an sich bekannt. Sie werden als Toleranzringe bezeichnet und gehören zu jenen Verbindungselementen, die unter dem allgemeinen Begriff Spannfedern geführt werden.

Die Umfangslänge dieses Toleranzringes ist so bemessen, daß die Kanten 7, die seinen Längsschlitz begrenzen, bei funktionsgerecht eingesetztem, unbelastetem Toleranzring an den Flanken 4 des Vorsprunges 8 anliegen (siehe Fig. 4). Unter « unbelastet » im vorstehend erwähnten Sinne wird hier verstanden, daß der Toleranzring 6 in die Bohrung 3 dieses Nockens 2 eingelegt ist, die Welle 1 ist jedoch noch nicht eingeschoben, die Stirnkanten 7 des Längsschlitzes liegen aber bereits an den Flanken 4 des Vorsprunges 8 an.

Dadurch, daß die Kanten 7 des Längsschlitzes des Toleranzringes 6 sich an den Flanken 4 des Vorsprunges 8 abstützen (Fig. 4), sind die Welle 1 und der Nocken 2 außerordentlich fest kraftschlüssig miteinander verbunden. Wird der Verlauf der Radialkraft P, die auf den Nocken 2 beim betriebsmäßigen Einsatz der Nockenwelle einwirkt, betrachtet, und zwar in Abhängigkeit vom Drehwinkel der Nockenwelle 1, so ist festzustellen, daß diese Radialkraft P dort eine extreme Spitze aufweist, wo der Nocken 2 mit dem von ihm zu betätigenden Ventilstößel in kraftschlüssige Verbindung tritt, das ist der Augenblick, wo durch den sich drehenden Nocken 2 dieser hier nicht gezeigte Stößel in Bewegung gesetzt, beschleunigt wird. Der Verlauf dieser Radialkraft P ist schematisch in Fig. 5 gezeigt, wobei $\varphi$ den Drehwinkel bezeichnet und P die Radialkraft.

Gemäß der Erfindung ist der Vorsprung 8 nun in jenem Winkelbereich angeordnet, der dem Winkel $\varphi E$ nach dem Diagramm der Fig. 5 entspricht, so daß jeder Nocken 2 im Augenblick seiner höchsten radialen Belastung über die erwähnte Fläche 5 des Vorsprunges 8 gegenüber der Welle 1 abgestützt ist. Im übrigen Bereich, in dem die auf den Nocken 2 einwirkende Radialkraft P geringer ist, ist der Nocken 2 gegenüber der Welle 1 über den Toleranzring 6 abgestützt, der aufgrund seiner umfangsseitigen Verspannung durch die Abstützung der Kanten 7 des Längsschlitzes an den Flanken 4 des Vorsprunges 8 dem Nocken 2 einen extrem sicheren und festen Halt auf der Welle 1 verleiht.

In diesem Zusammenhang ist nochmals auf die DE-OS 33 21 846 zu verweisen, bei welcher ein nabenseitiger, dreieckförmiger Nocken gegenüber der Symmetrieebene dieses Nockens um den Winkel β versetzt ist. Dieser Winkel β ist gleich dem halben Winkel α, der wiederum dem Winkel zwischen Einlaß- und Auslaßventil entspricht. Bei der erfindungsgemäßen Konstruktion hingegen ist die beanspruchte Winkellage eine Funktion des Nockens. Bei der aus der DE-OS 33 21 846 entnehmbaren Konstruktion können nur Kräfte in Umfangsrichtung übertragen werden durch die hier vorgesehene Feder-Nut-Verbindung. Die Federn sind dabei winkelmäßig versetzt, aus welchen Gründen nur jeder zweite Nocken entlang der Nockenwelle den Federvorsprung sozusagen an der richtigen Stelle hat, wobei diese vorbekannten Federvorsprünge hier ausschließlich und allein der Positionierung dienen, was hingegen beim Erfindungsgegenstand nicht der Fall ist, der Nocken kann gegenüber der Welle jede beliebige Winkelstellung einnehmen.

Auf der Welle 1 sitzen in der Regel mehrere gegeneinander winkelversetzte Nocken 2. Zur Montage werden die Toleranzringe 6 in die Bohrung 3 eines Nockens eingelegt und der so vorbereitete Nocken wird dann in entsprechender Winkellage gegenüber der Welle 1 auf diese aufgeschoben. Wie umfangreiche Versuche zeigen, bietet der so abgestützte Toleranzring 6 einen sicheren und festen Halt, auch bei sehr hoher Beanspruchung der Nockenwelle. Die der Montage der Nockenwelle dienende Einrichtung ist dabei so ausgestaltet, daß sie gewährleistet, ·daß der Toleranzring 6 die ihm zugeordnete Lage in der Bohrung 3 während des Aufschiebens des Nockens 2 auf die Welle 1 beibehält.

Zur Montage der Nockenwelle werden die Nocken in entsprechend axialem Abstand und mit dem vorgesehenen Winkelversatz in ein Werkzeug eingebracht. Die Halter für die Nocken in diesem Werkzeug können mit Kraftmessern verbunden sein, so daß beim nachfolgenden Einschieben der Welle 1 festgestellt werden kann, daß die für den ordnungsgemäßen und sicheren Sitz der Nocken notwendige Haltekraft auch jeweils erreicht ist.

Der Nocken 2 kann aus vollem Material spanabhebend gefertigt sein, zweckmäßig ist es jedoch, den Nocken zu sintern, ein Fertigungsverfahren also anzuwenden, daß sich besonders dann anbietet, wenn der Verlauf der Zylinderwand der Bohrung 3 für die Aufnahme der Welle 1 durch einen Vorsprung 8 unterbrochen ist.

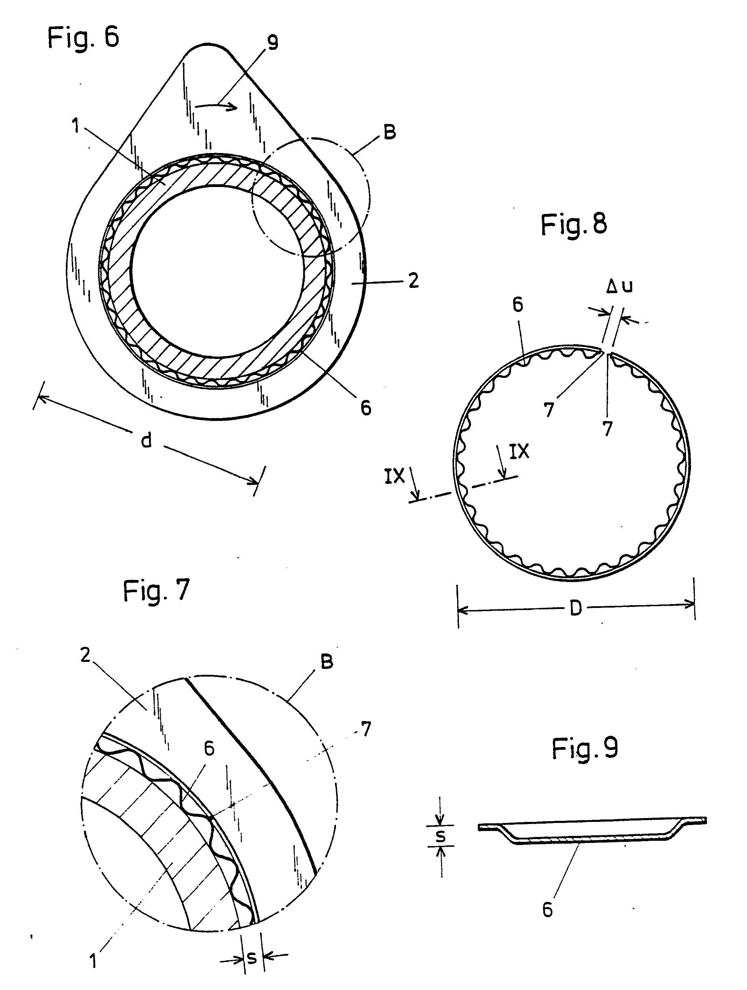

Eine besonders einfache Konstruktion veranschaulicht noch die Fig. 6 in Verbindung mit den Fig. 7 und 8. Der Nocken 2 nach Fig. 6 besitzt für die Aufnahme der Welle 1 eine Bohrung 3 mit einer stetig verlaufenden Zylinderwand. Der hier einzusetzende Toleranzring 6 ist in Fig. 8 veranschaulicht. Die Fig. 9 zeigt einen Querschnitt durch diesen Ring nach der Schnittlinie IX-IX. Der vorerst noch gänzlich unbelastete Ring 6 besitzt einen Außendurchmesser D, der um ein geringes Maß größer ist, als der Durchmesser d der Bohrung 3. Die Durchmesserdifferenz beträgt: $\Delta D = \Delta U / \pi$. $\Delta U$ ist die Bogenlänge des Längsschlitzes des Ringes 6, der von den Stirnkanten 7 begrenzt wird. Die Kanten 7 des Längsschlitzes sind dabei so ausgebildet und zueinander angeordnet, daß die beiden denselben Radialbestand besitzen, so daß beim Zusammendrücken des Ringes nach Fig. 8 die beiden Kanten 7 unmittelbar aneinander anliegen. Wird der Toleranzring nach Fig. 8 in der beschriebenen Weise zusammengedrückt, so daß die Kanten 7 des Längsschlitzes einander berühren, so verjüngt sich der Toleranzring 6 auf den Durchmesser d und er kann nun in die Bohrung 3 des Nockens 2 (Fig. 6) eingesetzt werden. Die Stoßstelle der beiden Kanten 7 ist in der Fig. 7 in einem gegenüber Fig. 6 vergrößerten Maßstab dargestellt. Der Toleranzring ist in der Bohrung 3 des Nockens 2 somit festgelegt, er kann sich, wenn nun die Welle 1 eingeschoben wird zwar radial etwas bewegen, eine Bewegung in Umfangsrichtung ist jedoch ausgeschlossen. Dadurch wird ein außerordentlich hoher kraftschlüssiger Verbund zwischen Nocke 2 und Welle 1 erzielt, welcher auch extrem ungünstigen, dynamischen Belastungen, wie in Fig. 5 schematisch veranschaulicht, auf Dauer sicher und zuverlässig standzuhalten vermag.

Im gezeigten Ausführungsbeispiel nach den Fig. 2, 3 und 4 ist der Vorsprung 8, an dessen Flanken 4 sich die Kanten 7 des Längsschlitzes des Toleranzringes 6 abstützen, einstückig mit dem Nocken 2 ausgebildet. Um den Toleranzring 6 in der geschilderten Weise abstützen zu können, könnte an der Welle 1 eine entsprechende, gegenüber deren Umfangskontur vorspringende Leiste angeformt sein, die die Funktion dieses Vorsprunges 8 übernimmt. Eine weitere Möglichkeit wäre, eine solche Leiste als getrennten Bauteil zu fertigen und ihn zwischen Welle 1 und Nocken 2 mit dem Toleranzring 6 einzuschieben. Dabei könnte eine solche Leiste eine Höhe haben, die größer ist als die halbe Differenz des Innendurchmessers der Bohrung 3 und des Außendurchmessers der Welle 1. In der Welle und/oder im Nocken wäre dann eine Nut vorzusehen, die einen Teil der Höhe einer solchen Leiste bei der Montage aufnimmt. Alle diese Maßnahmen sind aber fertigungstechnisch und auch von der Montage her gesehen sehr aufwendig und kompliziert und dürften für eine Serienproduktion wohl nur untergeordnete Bedeutung haben.

Um die umfangsseitige Abstützung des Toleranzringes 6 zu erreichen, liegen die den Längsschlitz begrenzenden Kanten 7 entweder an den Flanken 4 des mehrfach erwähnten Vorsprunges 8 an oder aber unmittelbar aneinander, wie dies im Zusammenhang mit den Fig. 6, 7 und 8 erläutert worden ist. Eine weitere Möglichkeit wäre nun, die aneinander anliegenden Kanten 7 miteinander fest zu verbinden, beispielsweise miteinander zu verlöten oder zu verschweißen, so daß ein in sich geschlossener Ring vorliegt. Auch über einen solchen, in sich geschlossenen Ring kann diese umfangsseitige Abstützung erzielt werden. In Hinblick auf den angestrebten Effekt reicht es zwar durchaus, wenn die erwähnten Kanten 7 stumpf aneinander anliegen, die erwähnte feste Verbindung dieser Kanten 7 durch Löten oder Schweißen läßt nach bisherigen Versuchen keine Verbesserung des kraftschlüssigen Verbundes feststellen, da in beiden zuletzt betrachteten Fällen der Federblechring in sich umfangsseitig geschlossen ist.

Dank dieser einfachen Konstruktion kann für die Welle 1 ein kaltgezogenes Rohr verwendet werden, das nicht weiter bearbeitet sein muß. Gegenüber allen anderen bekannten Nockenwellenkonstruktionen unterscheidet sich der erfindungsgemäße Vorschlag durch seinen besonders einfachen Aufbau, der konstruktiv ohne besonderen Aufwand erzielt und erreicht werden kann.

**Patentansprüche**

1. Nockenwelle zur Betätigung von Ventilstößel bei Verbrennungskraftmaschinen, mit einer Welle (1) und mindestens einem auf die Welle aufgeschobenen und mit ihr verbundenen Nocken (2), der eine axiale Bohrung (3) mit im wesentlichen zum Querschnittsprofil der Welle (1) korrespondierendem Profil aufweist, dadurch gekennzeichnet, daß zwischen Nocken (2) und Welle (1) ein in sich gewellter, längsgeschlitzter Federblechstreifen (6) (Toleranzring) liegt, dessen den Längsschlitz begrenzende Kanten (7) bei unbelastetem, jedoch in die Bohrung (3) des Nockens (2) eingelegtem bzw. auf die Welle (1) aufgestecktem Federblechstreifen (6) — bevor die zu paarenden Teile (1, 2) zusammengefügt werden — in Umfangsrichtung des Federblechstreifens (6) abgestützt sind.

2. Nockenwelle nach Anspruch 1, dadurch gekennzeichnet, daß bei unbelastetem, jedoch in die Bohrung (3) des Nockens (2) eingelegtem bzw. auf die Welle (1) aufgestecktem Federblechstreifen (6) — bevor die zu paarenden Teile (1, 2) zusammengefügt werden — die den Schlitz begrenzenden Kanten (7) unmittelbar aneinander anliegen.

3. Nockenwelle nach Anspruch 1, dadurch gekennzeichnet, daß die den Längsschlitz begrenzenden Kanten (7) des Federblechstreifens (6) an Flanken (4) eines Vorsprunges (8) anliegen, der von der Wandung der Bohrung (3) des Nockens (2) nach innen auskragt und die der Welle (1) zugewandte Fläche (5) dieses Vorsprunges (8) als Teilzylinderfläche mit zur Wellenoberfläche im wesentlichen korrespondierender Krümmung ausgebildet ist und die Flanken (4) des Vorsprunges (8) im wesentlichen radial verlaufen.

4. Nockenwelle nach Anspruch 3, dadurch gekennzeichnet, daß der Vorsprung (8) bezogen auf die Symmetrieachse (10) des Nockens (2) in jenem Winkelbereich (φE) liegt, in welchem bei betriebsmäßigem Einsatz der umlaufende Nocken (2) mit dem zu betätigenden Stößel in kraftschlüssige Verbindung tritt.

5. Nockenwelle nach Anspruch 3 oder 4, dadurch gekennzeichnet, daß die radiale Stärke (s) des in sich gewellten und durch Nocken und Welle belasteten Federblechstreifens (6) etwa der radialen Erstreckung des Vorsprunges (8) entspricht.

6. Nockenwelle nach Anspruch 1, dadurch gekennzeichnet, daß die radiale Stärke (s) des in sich gewellten und geschlitzten, unbelasteten Federblechstreifens (6) um ein geringes Maß größer ist als die halbe Differenz des Durchmessers der Bohrung (3) und des Außendurchmessers der Welle (1).

7. Nockenwelle nach einem der Ansprüche 1 bis 6, dadurch gekennzeichnet, daß als Welle (1) ein kaltgezogenes Rohrstück vorgesehen ist.

8. Nockenwelle nach Anspruch 2, dadurch gekennzeichnet, daß die unmittelbar aneinander anliegenden Kanten (7) des Federblechstreifens (6) miteinander fest verbunden, beispielsweise miteinander verlötet oder verschweißt sind.

**Claims**

1. A camshaft for actuating valve tappets in combustion engines, having a shaft (1) and at least one cam pushed over the said shaft and connected thereto, the said cam having an axial bore (3) with a profile substantially corresponding to the cross-sectional profile of the shaft (1), characterised in that a spring sheet-metal strip (6) (tolerance ring), which is slotted in the longitudinal direction and corrugated per se, lies between the cam (2) and the shaft (1), the edges (7) of the said strip defining the longitudinal slot being supported in the circumferential direction of the spring sheet-metal strip (8) when the said strip is unstressed but inserted in the bore (3) of the cam (2) or placed on the shaft (1), before the parts (1, 2) to be paired are joined.

2. A camshaft according to claim 1, characterised in that the edges (7) defining the slot immediately about one another when the said strip is unstressed but inserted in the bore (3) of the cam (2) or placed on the shaft (1), before the parts (1, 2) to be paired are joined.

3. A camshaft according to claim 1, characterised in that the edges (7) of the spring sheet-metal strip (8) defining the longitudinal slot about the sides (4) of a projection (8) projecting inwards from the wall of the bore (3) of the cam (2), and the face (5) of the said projection (8) facing the shaft (1) is formed as a part cylinder face curved so as substantially to correspond to the shaft surface, and the sides (4) of the projection (8) extend substantially radially.

4. A camshaft according to claim 3, characterised in that the projection (8) lies, with respect to the axis of symmetry (10) of the cam (2) in the angular region (E) in which, during operation, the revolving cam (2) is connected non-positively to the tappet to be actuated.

5. A camshaft according to claim 3 or 4, characterised in that the radial depth (s) of the spring sheet-metal strip (6) corrugated per se and stressed by the cam and the shaft approximately corresponds to the radial extension of the projection (8).

6. A camshaft according to claim 1, characterised in that the radial depth (s) of the slotted, unstressed spring sheet-metal strip (6) corrugated per se is slightly greater than half the difference between the diameter of the bore (3) and the outer diameter of the shaft (1).

7. A camshaft according to one of claims 1 to 6, characterised in that a cold-drawn blank is provided as a shaft (1).

8. A camshaft according to claim 2, characterised in that the directly abutting edges (7) of the spring sheet-metal strip (6) are rigidly connected together, for example soldered or welded together.

**Revendications**

1. Arbre à cames pour actionner des poussoirs de soupapes dans des moteurs à combustion interne, avec un arbre (1) et avec au moins une came (2) enfilée sur cet arbre et assemblée avec lui, cette came comportant un alésage axial (3) avec un profil correspondant essentiellement au profil de la section transversale de l'arbre (1), arbre à cames caractérisé en ce qu'entre la came (2) et l'arbre (1) est placée une bande (6) de tôle à ressort ondulée, fendue longitudinalement (anneau de tolérance), et dont les bords (7), délimitant la fente longitudinale, sont en appui en direction périphérique de cette bande de tôle à ressort (6), avant que les pièces (1, 2) à apparier soient assemblées, et alors que cette bande n'est soumise à aucune contrainte, en étant toutefois insérée dans l'alésage (3) de la came (2) ou bien enfilée sur l'arbre (1).

2. Arbre à cames selon la revendication 1, caractérisé en ce qu'avant que les pièces (1, 2) à apparier soient assemblées, et alors que la bande de tôle à ressort (6) n'est soumise à aucune contrainte, en étant toutefois insérée dans l'alésage (3) de la came (2) ou bien enfilée sur l'arbre (1), les bords (7) délimitant la fente s'appliquent directement l'un contre l'autre.

3. Arbre à cames selon la revendication 1, caractérisé en ce que les bords (7), délimitant la fente longitudinale, de la bande de tôle à ressort (6), s'appliquent contre des flancs (4) d'une saillie (8) s'étendant depuis la paroi de l'alésage (3) de la came (2) vers l'intérieur, la surface (5) tournée vers l'arbre (1), de cette saillie (8), revêtant la forme d'une surface cylindrique partielle dont la courbure correspond essentiellement à celle de la surface de l'arbre, tandis que les flancs (4) de la saillie (8) s'étendent en pratique radialement.

4. Arbre à cames selon la revendication 3, caractérisé en ce que la saillie (8) rapportée à l'axe de symétrie (10) de la came (2), se situe dans la zone angulaire ($\varphi E$) dans laquelle, pendant son fonctionnement, la came (2) en rotation vient en prise, par adhérence, avec le poussoir à actionner.

5. Arbre à cames selon la revendication 3 ou 4, caractérisé en ce que l'épaisseur radiale (s) de la bande de tôle à ressort ondulée (6), contrainte par la came et par l'arbre, correspond à peu près à l'étendue radiale de la saillie (8).

6. Arbre à cames selon la revendication 1, caractérisé en ce que l'épaisseur radiale (s) de la bande de tôle à ressort (6), ondulée et fendue et ne subissant aucune contrainte, est légèrement supérieure à la demi-différence entre le diamètre de l'alésage (3) et le diamètre externe de l'arbre (1).

7. Arbre à cames selon une des revendications 1 à 6, caractérisé en ce qu'il est prévu, comme arbre (1), un tronçon de tube étiré à froid.

8. Arbre à cames selon la revendication 2, caractérisé en ce que les bords (7), s'appliquant directement l'un contre l'autre, de la bande de tôle à ressort (6), sont fermement assemblés entre eux, par exemple brasés ou soudés entre eux.

EP 0 234 398 B1

Fig.1

Fig.2

Fig.3

Fig.4

Fig.5

Fig. 6

9

1

B

2

6

d

Fig. 8

Δu

6

7

7

IX

IX

D

Fig. 7

2

B

6

7

1

s

Fig. 9

s

6